# EUROPEAN PATENT APPLICATION

(11) **EP 2 210 739 A1**
(43) Date of publication of application: **28.07.2010**
(21) Application number: 08844111.8
(22) Date of filing: 30.10.2008
(51) Int. Cl.: B41F 33/00, B41F 33/02, G06F 3/12, G06T 5/00, H04N 1/387

(54) **PRINT SIMULATION SYSTEM, PRINT SIMULATION METHOD AND PRINT MANAGEMENT SYSTEM**

(30) Priority: 01.11.2007 JP 2007285375
(71) Applicant: Mitsubishi Heavy Industries, Ltd., Tokyo 108-8215 (JP)
(72) Inventor: OZAKI, Ikuo, Hiroshima-shi Hiroshima 733-8553 (JP); TAKEMOTO, Shuichi, Mihara-shi Hiroshima 729-0393 (JP); TASAKA, Norifumi, Mihara-shi Hiroshima 729-0393 (JP)
(74) Representative: HOFFMANN EITLE
(86) International application number: PCT/JP2008/069743
(87) International publication number: WO 2009/057687

(57) **Abstract**

The invention relates to a printing simulation system and a printing simulation method as well as a printing management system. The printing simulation system includes a display controlling apparatus for simulation-displaying the picture of a result where a picture obtained from the picture data to be printed is printed under a printing condition obtained from printing condition data on a monitor screen. A displaying mode which is a displaying mode where a plurality of printing conditions are applied and in which results where one picture is divided into a plurality of regions and printing is carried out in the divided regions under individual printing conditions are simulation-displayed is provided as a simulation-displaying mode by the display controlling apparatus. In the printing simulation system, comparison between specific portions of pictures can be carried out more easily in a system wherein the pictures of results where a picture is printed under different printing conditions are simulation-displayed for comparison on the monitor to evaluate the color tone.

## Description

### Technical Field

The present invention relates to a system and a method suitable for use to set a printing condition in advance before start of printing without actually carrying out printing, and particularly to a printing simulation system, a printing simulation method and a printing management system for simulating a printing result in accordance with a printing condition and displaying the printing result as an image.

### Background Art

In a printing technique wherein a printing plate is made and printing ink is transferred to a printing object such as printing paper in accordance with the printing plate using a printing drum to carry out printing beginning with offset printing of a newspaper rotary press or the like, the color tone (color shade) of a printed matter can be varied by adjusting the amount of ink to be transferred and supplied to the printing object. Normally, a printing operator manually adjusts the ink supplying amount while confirming an actually printed matter (that is, a printing result) so that the printing color tone satisfies a requirement (color sample) therefor.

In this instance, a printed matter before the ink supplying amount becomes an appropriate amount is not an appropriate produce and it cannot be avoided to dispose of the printed matter as an inappropriate printed matter called, for example, loss paper or the like. Naturally, if the ink supplying amount is normally adjusted based on a printing result obtained while a printing press is driven at a lower speed than that upon actual printing at an adjustment stage of the printing press before actual printing (regular printing), the number of inappropriate printed matters can be suppressed. However, this similarly leads to waste of printing materials such as paper and ink and increase of printing time before completion of printing.

On the other hand, in recent years, a printing press which does not use a printing plate and is called printer such as an ink jet printer or a laser printer which is a kind of electronic photograph printer has been popularized together with popularization of personal computers. In many cases, such a printer as just described is used usually in a state wherein it is connected to a personal computer such that an image displayed on a monitor display unit (hereinafter referred to as monitor) of the personal computer is printed by the printer. Also where the state of color to be printed by the printer is to be corrected, it can be corrected while the monitor display of the personal computer is referred to.

However, the color reproduction on the monitor is based on additive color mixture of three primary color lights of red, green and blue (hereinafter referred to simply as R, G and B, respectively), and the purity of the three primary colors is high and color reproducibility is good. However, color reproduction by the printer is based on subtractive color mixture of three primary color inks of cyan, magenta and yellow (hereinafter referred to as C, M and Y, respectively) and exhibits narrower color reproducibility than that of the monitor. Therefore, a color reproduced by the printer is frequently different from a color reproduced on the monitor and, even if a color reproduction state is corrected by referring to a color displayed on the monitor of the personal computer, the color printed by the printer does not correspond to the correction. Therefore, the state of a color printed by the printer cannot be corrected appropriately only if display on the monitor of the personal computer is referred to.

On the other hand, Patent Document 1 discloses a technique wherein a process for allocating a color within a color range which can be reproduced by an image outputting apparatus (printer) is carried out for original image data displayed on a display apparatus (monitor) and a tentative output image which may be outputted from the image outputting apparatus is produced using a displaying color correction mapping table and is displayed on the display apparatus such that it can be found in advance in what manner the tentative output image is outputted (printed) by visually comparing the tentative output image and the original image (paragraph 0008). With the technique, precise color correction can be carried out in response to a color characteristic variation of the image outputting apparatus, and, by displaying an image to be printed on the display apparatus before it is printed, color adjustment with an original picture can be carried out simply (paragraph 0067).

Meanwhile, Patent Document 2 discloses a technique wherein a correction value based on a color difference between a display image outputted by a monitor and a printed image outputted by a printer is acquired based on same image data and, in order that a color to be reproduced on the monitor may approach a color to be reproduced by printing by the printer, original image data received from an application is converted using the correction value and then image displaying by the monitor is carried out based on the converted original image data (abstract, claim 1, paragraphs 0014 and 0056 to 0061). In this instance, an image based on the original image data and a corrected image based on the image data converted by a color tone conversion processing section are displayed on the monitor (abstract, paragraph 0061).

With the technique, it becomes possible for one of the two image outputting apparatus (in particular, the color display unit and the printer) having color spaces different from each other to carry out image formation whose color is adjusted to a color reproduced by the other apparatus (paragraph 0075). Further, by measuring an emitted light color on the monitor and a displayed color on a color printed matter by means of an optical sensor to calculate a color difference in a uniform color space and carrying out an image process in order that color reproduction of an image plotted on the monitor is adjusted to that of the printer to carry out color adjustment, it becomes possible to establish color matching between the images (paragraph 0076).

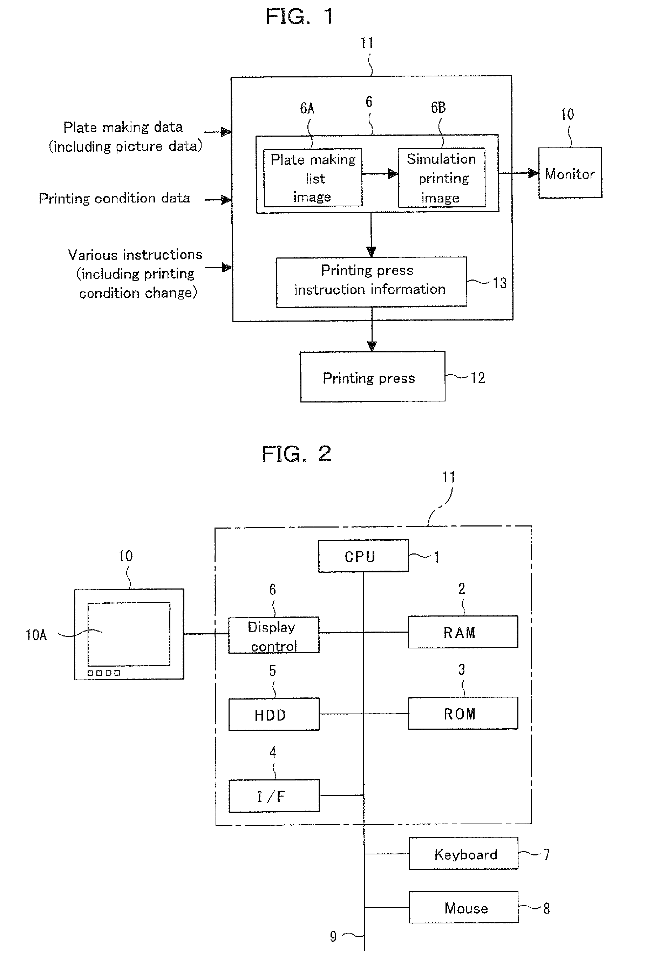

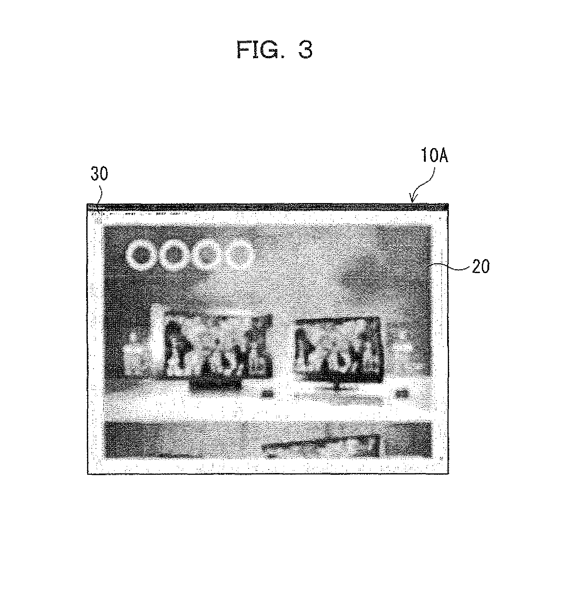

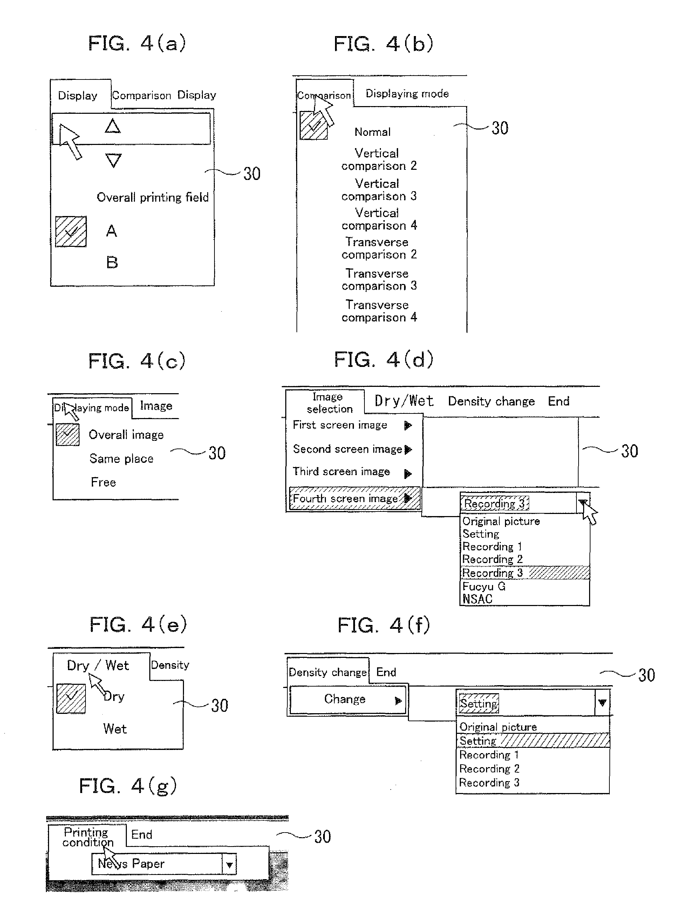

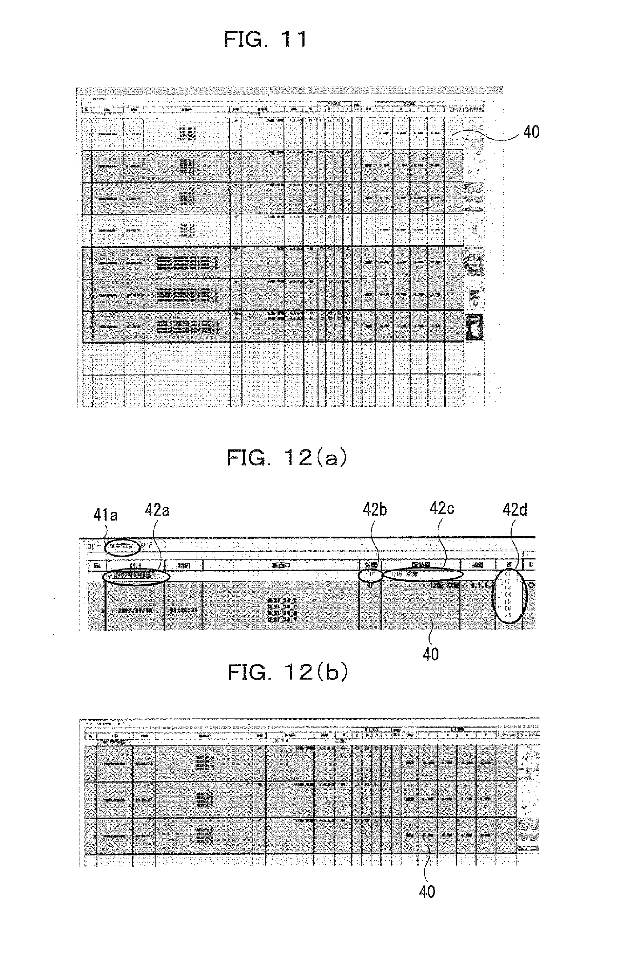

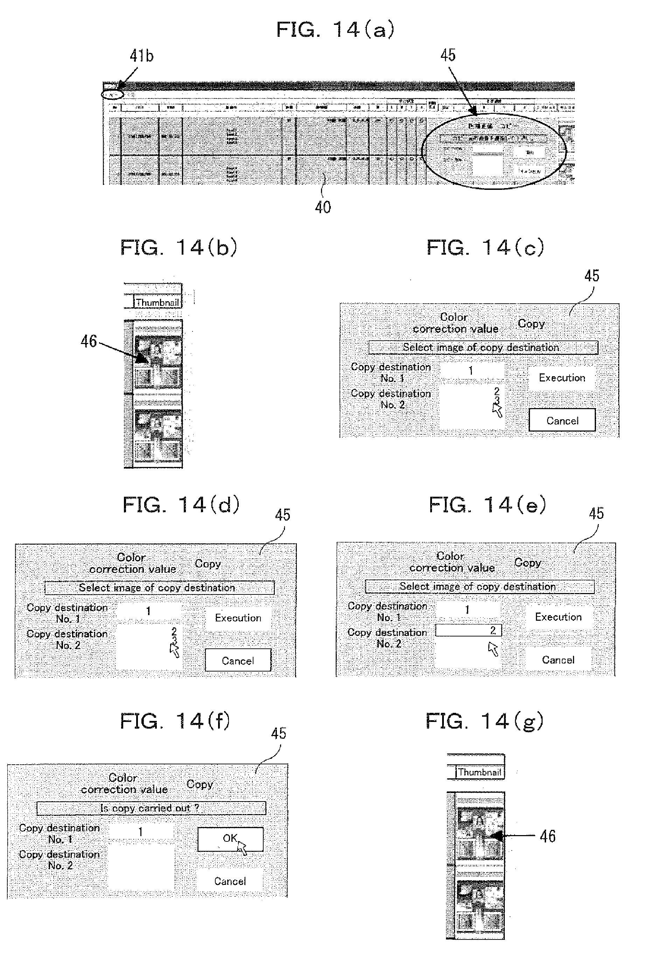

It is to be noted that, in the case of Patent Document 2, by displaying the image based on the original image data and the correction image in a juxtaposed relationship with each other on the monitor, both images can be compared with each other (refer to FIG. 12 of Patent Document 2).
Although such image comparison is not limited to comparison of two images having color spaces different from each other, where two images are displayed for comparison on the monitor in this manner, it is most popular to display the two images for comparison independently of each other and in a juxtaposed relationship of equality in a leftward and rightward direction or an upward and downward direction (refer to FIG. 3 of Patent Document 3, FIGS. 2 and 4 of Patent Document 4, and FIG. 14 of Patent Document 5).
Patent Document 1: Japanese Patent Laid-Open No. Hei 7-87345
Patent Document 2: Japanese Patent Laid-Open No. Hei 11-4353
Patent Document 3: Japanese Patent Laid-Open No. 2000-298467
Patent Document 4: Japanese Patent Laid-Open No. 2005-91430
Patent Document 5: Japanese Patent No. 3890211

### Disclosure of the Invention

### Subject to Be Solved by the Invention

Incidentally, with the techniques of Patent Documents 1 and 2, although it is possible to correct a printing image in advance by displaying an image to be printed by a printer on a monitor with high accuracy before the image is printed, it is estimated that such techniques can be applied also to a printing press which uses a printing plate.
However, in the case of the printing press which uses a printing plate, a printing color tone of higher accuracy is requested occasionally, and, with a monitor displaying form of a printing picture by the conventional techniques, it is sometimes difficult to correct the color tone with high accuracy when a printing image is corrected in advance.

In particular, if two images to be compared are displayed independently of each other and in a juxtaposed relationship of equality in a leftward and rightward direction or an upward and downward direction as disclosed in Patent Documents 2 to 5, then although this is convenient for comparison of the images in regard to the entire picture, this is not always convenient for local comparison in color tone of the images in regard to a specific portion of the picture.
Where the color tone of a printed matter is to be controlled, the color tone is frequently desired to be adjusted to a target state (for example, a color sample) in regard to a specific portion of a picture of the printed matter. Thus, if the two images to be compared are displayed independently of each other and in a juxtaposed relationship with each other, then specific portions of the pictures of the images are spaced from each other and besides some other picture portions exist around the specific portions. Therefore, it is difficult to detect a subtle difference in color tone by visual comparison.

The present invention has been made in view of such a subject as described above, and it is an object of the present invention to provide a printing simulation system and a printing simulation method as well as printing management system wherein, where pictures of results where a picture is printed under different printing conditions are simulation-displayed for comparison on a monitor so that a color tone can be evaluated without carrying out printing, comparison between specific portions of pictures can be carried out more easily thereby to make it possible to adjust the printing color tone with higher accuracy. Means for Solving the Subject

In order to attain the object described above, according to an aspect of the present invention, there is provided a printing simulation system, comprising a monitor apparatus, and a display controlling apparatus adapted to simulation-display the picture of a result where a picture of the picture data is printed based on picture data to be printed and printing condition data under a printing condition of the printing condition data on a monitor screen of the monitor apparatus, and wherein a displaying mode which is a displaying mode where a plurality of printing conditions are applied and in which results where one picture of the result is divided into a plurality of regions and, based on the picture data and the printing conditions, printing is carried out in the divided regions under the printing conditions are simulation-displayed is provided as a simulation-displaying mode by the display controlling apparatus.

Preferably, the printing condition includes a color development characteristic of a printing press to be used for printing, and a displaying mode which is a displaying mode where a plurality of printing presses are to be used for the printing and in which the picture is divided into a plurality of regions and pictures of results where printing is carried out in the divided regions by the printing presses based on the picture data and color development characteristic data and an ink supplying amount state of the printing presses are simulation-displayed is included as a simulation-displaying mode where a plurality of printing conditions are applied.

In the printing simulation system, the pictures of results where printing is carried out with color development characteristics of the different printing presses are continuously displayed without being spaced from each other between the divided regions, and the states of colors by the different printing presses can be compared more easily with each other and a printing color tone can be adjusted with a high degree of accuracy.

Alternatively, preferably the printing condition includes an ink supplying amount state upon printing, and a displaying mode which is a displaying mode where a plurality of ink supplying amount states upon printing are applied and in which pictures of results where the picture is divided into a plurality of regions and printing is carried out with the ink supplying amount states in the divided regions based on the picture data and color development characteristic data and the ink supplying amount states of the printing press are simulation-displayed is included as a simulation-displaying mode where a plurality of printing conditions are applied.

In the printing simulation system, the pictures of results where printing is carried out in different ink supplying amount states are continuously displayed without being spaced from each other between the divided regions, and states of colors when the ink supplying amount is changed can be compared more easily with each other and the printing color tone can be adjusted with a higher degree of accuracy.

Preferably, the printing simulation system is configured such that, when the picture is divided into a plurality of regions and displayed on the monitor screen, vertical division by which the picture is divided by a vertical line or lines such that the plural regions are juxtaposed in a transverse direction of the monitor screen and transverse division by which the picture is divided by a transverse line or lines such that the plural regions are juxtaposed in a vertical direction of the monitor screen can be selected.

In the printing simulation system, when the picture is divided into a plurality of regions, the vertical division by which the picture is divided by a vertical line or lines such that the plural regions are juxtaposed in a transverse direction of the monitor screen or the transverse division by which the picture is divided by a transverse line or lines such that the plural regions are juxtaposed in a vertical direction of the monitor screen is suitably selected, then comparison between the states of colors under the different printing conditions described above can be carried out more appropriately.

In this instance, preferably the printing simulation system is configured such that, when the picture is divided into a plurality of regions and displayed on the monitor screen, the portions at which the vertical division and the transverse division are carried out can be set to an arbitrary transverse direction portion or portions or an arbitrary vertical direction portion or portions of the monitor screen.

In the printing simulation system, since the portions at which the vertical division and the transverse division are carried out can be set to an arbitrary transverse direction portion on the monitor screen or an arbitrary vertical direction portion on the monitor screen, comparison of the states of colors under the different printing conditions described above can be carried out at an optimum location and comparison in color can be carried out more appropriately.

Preferably, a displaying mode which is a displaying mode where a plurality of printing conditions are applied and in which pictures of results where the monitor screen is divided into a plurality of regions and a displaying portion is selected from within the picture and then printing is carried out in the selected displaying portions in the divided screen regions under the printing conditions are simulation-displayed is provided as a simulation-displaying mode by the displaying controlling apparatus.

In the printing simulation system, since, as a displaying mode where a plurality of printing conditions are applied, a displaying mode is provided in which the pictures of results where the monitor screen is divided into a plurality of regions and printing is carried out in the displaying portions, which are selected from within the picture, in the divided screen regions under the printing conditions are simulation-displayed, the states of colors under different printing conditions can be compared in various displaying forms.

In this instance, preferably the printing simulation system further comprises a selection information inputting section adapted to input displaying portion selection information for selecting the displaying portion from within the picture by the display controlling apparatus, and a selection mode For selecting same displaying portions in the divided screen regions and another selection mode for selecting unique displaying portions individually in the divided screen regions are provided as selection modes to be inputted from the selection information inputting section.

In the printing simulation system, if same displaying portions are selected and displayed individually in the divided screen regions, then the states of colors under different printing conditions can be compared with each other while the overall displaying portions of the picture are compared with each other. Further, if unique displaying portions are selected and displayed individually in the divided screen regions, then the states of colors under different printing conditions can be compared with each other in various forms.

Preferably, when the screen is divided into a plurality of regions, vertical division by which the plural regions are juxtaposed in a transverse direction of the monitor screen and transverse division by which the plural regions are juxtaposed in a vertical direction of the monitor screen can be selected.

In the printing simulation system, when the screen is divided into a plurality of regions, if the vertical division by which the plural regions are juxtaposed in a transverse direction of the monitor screen or the transverse division by which the plural regions are juxtaposed in a vertical direction of the monitor screen is suitably selected, then the comparison between the states of colors under the different printing conditions described above can be carried out more appropriately.

In this instance, preferably the printing simulation system is configured such that, when the screen is divided into a plurality of regions, the portions at which the vertical division and the transverse division are carried out can be set to an arbitrary transverse direction portion or portions or an arbitrary vertical direction portion or portions of the monitor screen.

In the printing simulation system, since the dividing portion or portions when the screen is vertically divided or transversely divided into a plurality of regions can be set to an arbitrary transverse direction portion or portions on the monitor screen or to an arbitrary vertical direction portion or portions on the monitor screen, the comparison between the states of colors under the different printing conditions described above can be carried out at an optimum portion and the comparison in color can be carried out more appropriately.

Preferably, an ink supplying amount adjustment mode in which an ink supplying amount adjustment switch for adjusting an ink supplying amount state which is one of the printing conditions is displayed on the monitor screen and the printing results to be simulation-displayed on the monitor screen can be changed, in response to a changing operation of the ink supplying amount state carried out using the ink supplying amount adjustment switch, so as to correspond to the changed ink supplying amount state, is provided as a displaying mode on the monitor screen by the display controlling apparatus.

In the printing simulation system, if the ink supplying amount adjustment switch is displayed on the monitor screen using the ink supplying amount adjustment mode and a changing operation of the ink supplying amount state is carried out using the ink supplying amount adjustment switch, then printing results to be simulation-displayed on the monitor screen are changed to those corresponding to the changed ink supplying amount state. Therefore, an optimum ink supplying amount can be searched out while the simulation displaying screen image is referred to.

According to another aspect of the present invention, there is provided a printing management system which incorporates the printing simulation system described above, wherein a plate making list displaying mode in which a plate making list in which plate making data including the picture data and data regarding a printing press for carrying out printing based on the plate making data are associated with each other is displayed on the monitor screen is provided as a displaying mode of the display controlling apparatus, the picture data corresponding to the plate making data is displayed as a thumbnail image in an annexed state to the plate making list, and the display controlling apparatus is configured such that the displaying mode thereof is changed over to the simulation-displaying mode by designating the thumbnail image by an operation.

According to a further aspect of the present invention, there is provided a printing simulation method for simulation-displaying the picture of a result where a picture of the picture data is printed based on picture data to be printed and printing condition data under a printing condition of the printing condition data on a monitor screen, wherein a displaying mode which is a displaying mode where a plurality of printing conditions are applied and in which results where one picture of the result is divided into a plurality of regions and, based on the picture data and the printing conditions, printing is carried out in the divided regions under the printing conditions are simulation-displayed is provided as a simulation-displaying mode in which the simulation-displaying is to be carried out.

With the printing simulation system and the printing simulation method of the present invention, when the picture of a result where a picture of picture data to be printed is printed based on the picture data and printing condition data under a printing condition of the printing condition data on the monitor screen is to be simulation-displayed, in the displaying mode where a plurality of printing conditions are applied, results where one picture of the result is divided into a plurality of regions and printing is carried out in the divided regions under the printing conditions are simulation-displayed. Consequently, the pictures of results where printing is carried out in the different printing conditions are continuously displayed without being spaced from each other between the divided regions, and the states of colors based on the different printing conditions can be compared more easily with each other and the printing color tone can be adjusted with a high degree of accuracy.

With the printing management system of the present invention, if the displaying mode is set to the plate making list displaying mode in which a plate making list in which plate making data including picture data and data regarding a printing press for carrying out printing based on the plate making data are associated with each other is displayed and a thumbnail image of the picture data displayed corresponding to the plate making data in an annexed state to the plate making list is designated by an operation, then the displaying mode can be changed over to the simulation displaying mode. Consequently, confirmation of a color development state, adjustment of the ink supplying amount in advance and so forth can be carried out while printing management beginning with a plate making process is carried out.

### Brief Description of the Drawings

[FIG. 1] FIG. 1 is a block diagram showing a functional configuration of a printing simulation system and a printing management system according to an embodiment of the present invention.
[FIG. 2] FIG. 2 is a block diagram showing a hardware configuration of the printing simulation system and the printing management system according to the embodiment of the present invention.
[FIG. 3] FIG. 3 is a view showing an example wherein a printing picture is simulation-displayed on a monitor screen by the printing simulation system according to the embodiment of the present invention.
[FIG. 4] FIGS. 4(a) to 4(g) are explanatory views illustrating contents of menus in a menu bar in display of the monitor screen by the printing simulation system according to the embodiment of the present invention.

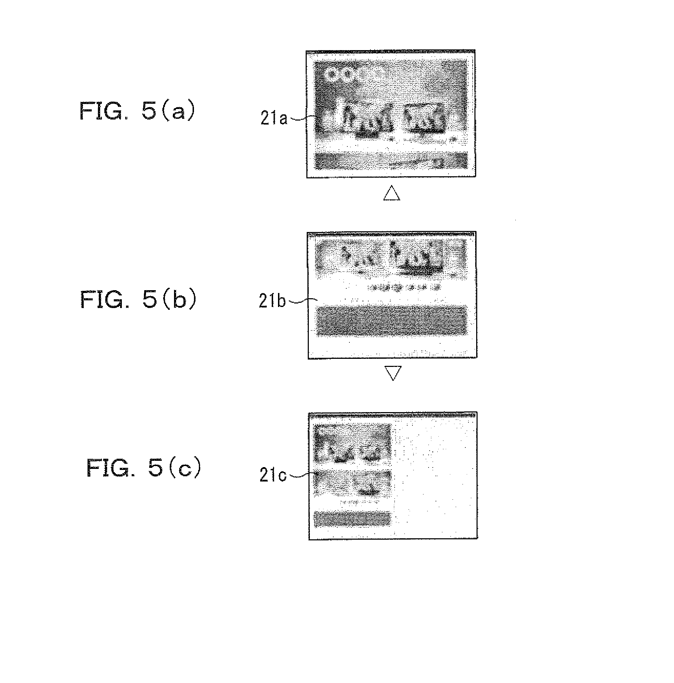

[FIG. 5] FIGS. 5(a) to 5(c) are views illustrating examples wherein a printing picture is simulation-displayed on the monitor screen by the printing simulation system according to the embodiment of the present invention and wherein FIGS. 5(a) and 5(b) illustrate a partially displaying state of a picture and
FIG. 5(c) illustrates an overall displaying state of the picture.

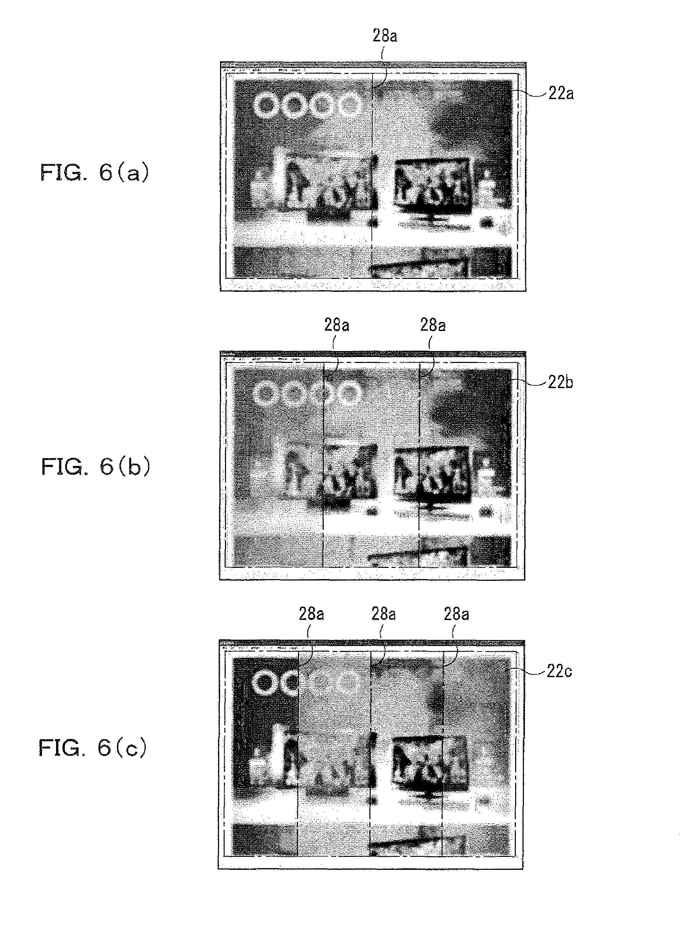

[FIG. 6] FIGS. 6(a) to 6(c) are views illustrating examples wherein a printing picture is simulation-displayed in a vertically divided state on the monitor screen by the printing simulation system according to the embodiment of the present invention and wherein FIGS. 6(a) to 6(c) show examples of display wherein the dividing numbers are different from each other.

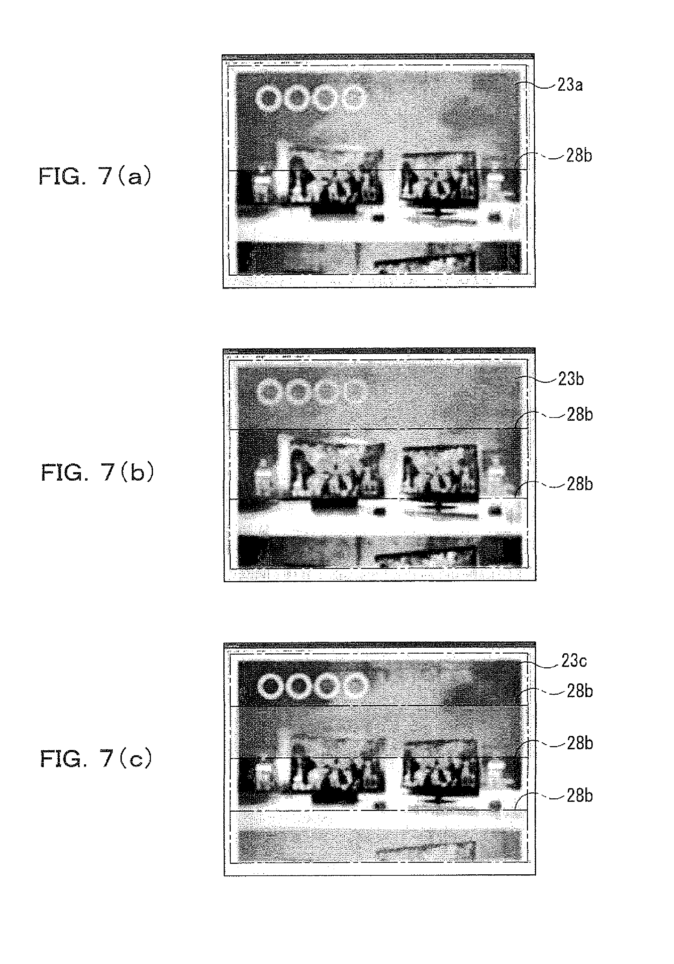

[FIG. 7] FIGS. 7(a) to 7(c) are views illustrating examples wherein a printing picture is simulation-displayed in a transversely divided state on the monitor screen by the printing simulation system according to the embodiment of the present invention and wherein FIGS. 7(a) to 7(c) show examples of display wherein the dividing numbers are different from each other.

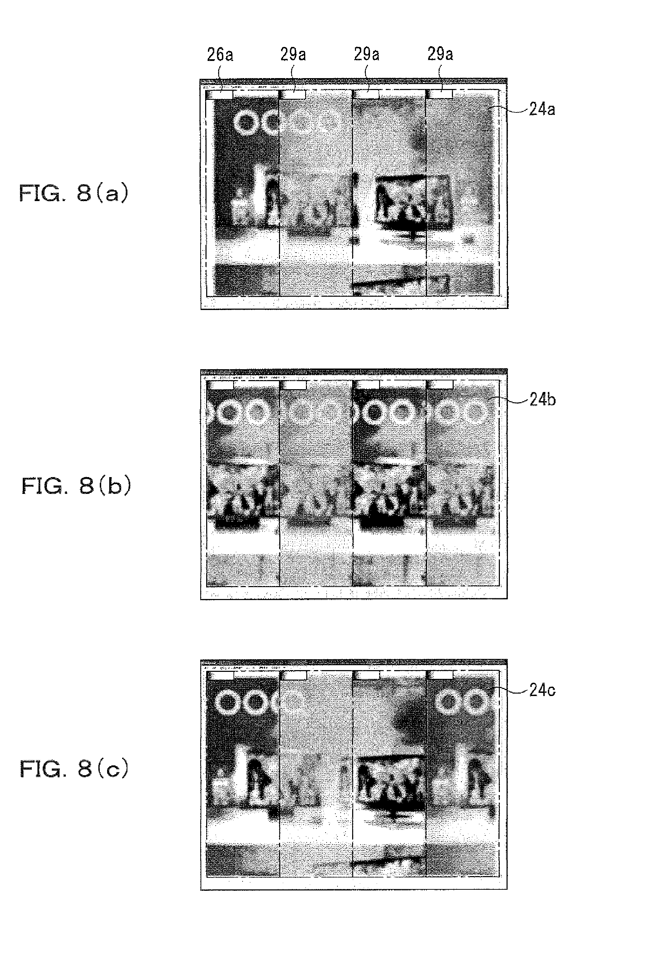

[FIG. 8] FIGS. 8(a) to 8(c) are views illustrating examples wherein the monitor screen is vertically divided and the printing picture is partially simulation-displayed on the divisional monitor screens by the printing simulation system according to the embodiment of the present invention and wherein FIGS. 8(a) to 8(c) show examples of display wherein the dividing numbers are different from each other.

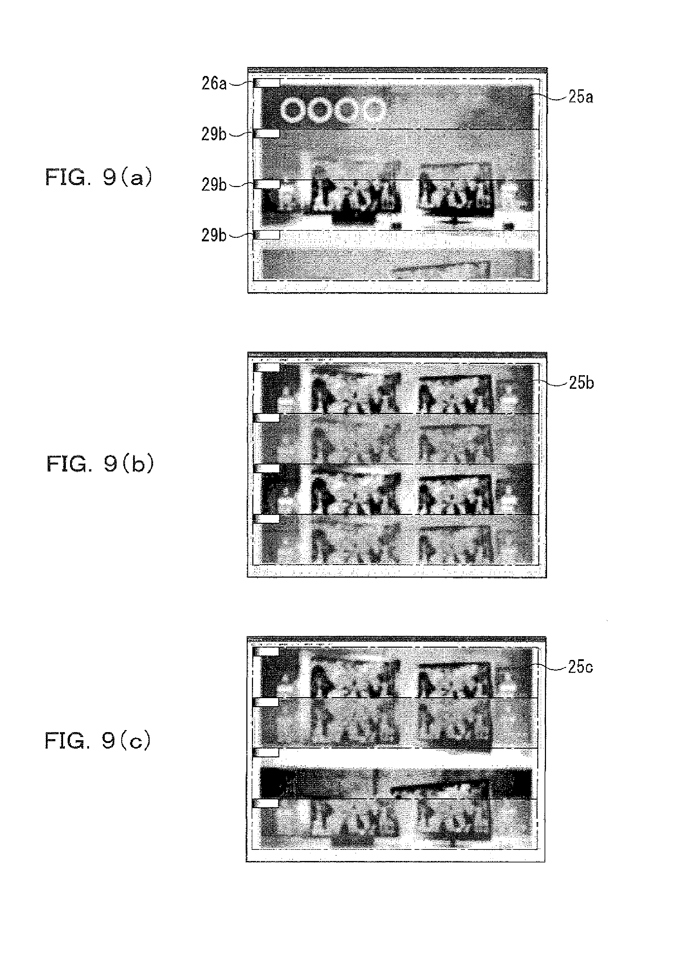

[FIG. 9] FIGS. 9(a) to 9(c) are views illustrating examples wherein the monitor screen is transversely divided and the printing picture is partially simulation-displayed on the divisional monitor screens by the printing simulation system according to the embodiment of the present invention and wherein FIGS. 9(a) to 9(c) show examples of display wherein the dividing numbers are different from each other.

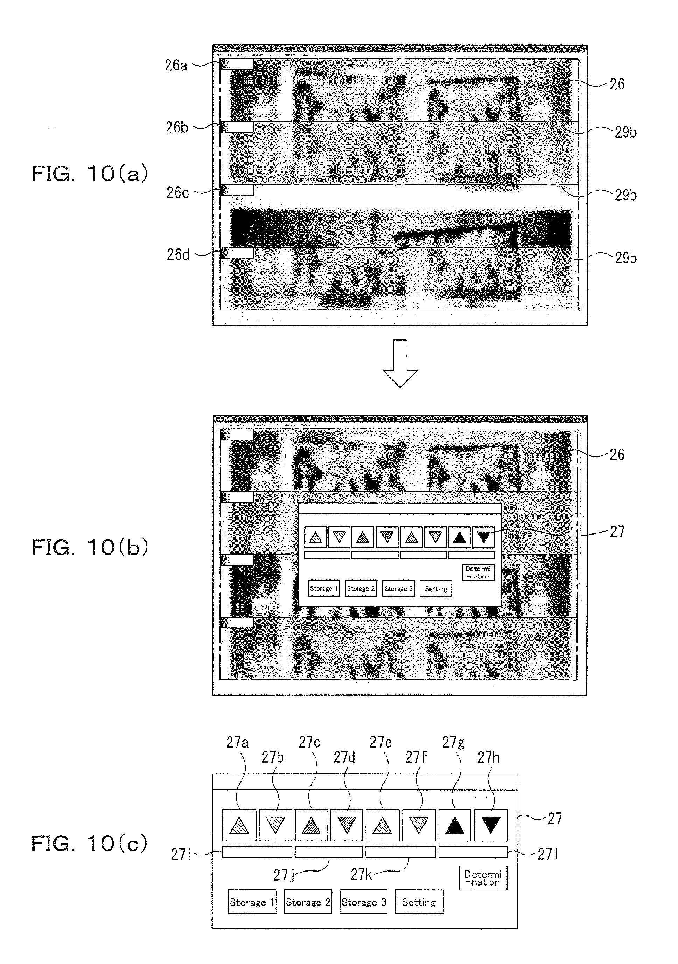

[FIG. 10] FIGS. 10(a) to 10(c) are views illustrating states wherein the ink supplying amount is simulation-adjusted while a printing picture is displayed on the monitor screen by the printing simulation system according to the embodiment of the present invention and wherein FIG. 10(a) shows a simulation displaying screen image, FIG. 10(b) shows a screen image on which an ink supplying amount adjustment button is displayed in a superposed state on the simulation displaying and
FIG. 10(c) shows only the ink supplying amount adjustment button.
[FIG. 11] FIG. 11 is a view showing an example wherein a plate making list is displayed on the monitor screen by the printing management system according to the embodiment of the present invention.
[FIG. 12] FIGS. 12(a) and 12(b) are views illustrating operations for carrying out a search while the plate making list is displayed on the monitor screen by the printing management system according to the embodiment of the present invention and wherein FIG. 12(a) shows operation items in the plate making list and FIG. 12(b) shows the plate making list of a result of the search.

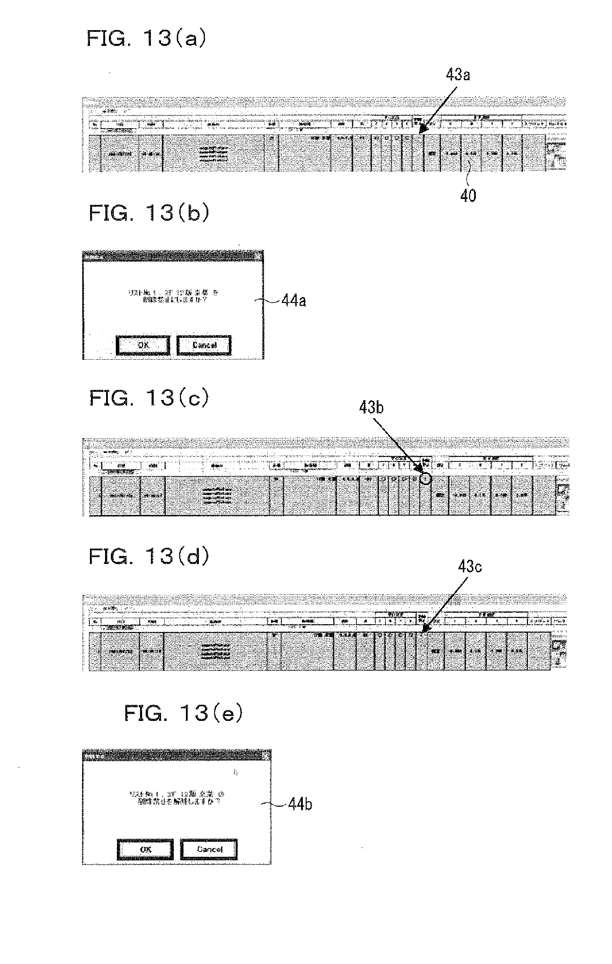

[FIG. 13] FIGS. 13(a) to 13(e) are views illustrating operations for carrying out deletion inhibition while the plate making list is displayed on the monitor screen by the printing management system according to the embodiment of the present invention and wherein FIGS. 13(a), 13(c) and 13(d) show operation items in the plate making list and FIGS. 13(b) and 13 (e) show confirmation screen images.
[FIG. 14] FIGS. 14(a) to 14(g) are views illustrating operations for carrying out color correction while the plate making list is displayed on the monitor screen by the printing management system according to the embodiment of the present invention and wherein FIG. 14(a) illustrates a state wherein a color correction value copy screen is displayed in a superposed state in the plate making list, FIG. 14(b) shows a thumbnail image used for instruction for color correction value copy, FIGS. 14(c) to 14(f) show color correction value copy screen confirmation screens and FIG. 14(g) shows a view showing a thumbnail image used for instruction of color conversion.

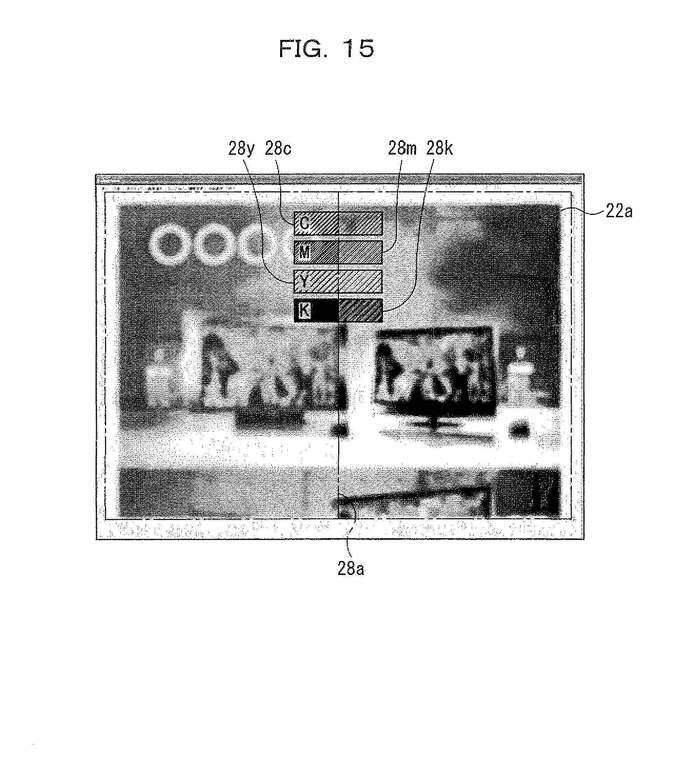

[FIG. 15] FIG. 15 is a view showing an example wherein a printing picture is simulation-displayed in a vertically divided relationship on the monitor screen by a printing simulation system according to a modification to the embodiment of the present invention.

### Description of the Reference Characters

- 1: CPU
- 2: RAM
- 3: ROM
- 4: input/output interface (I/F)
- 5: hard disk drive (HDD)
- 6: display controlling apparatus (display controlling section)
- 6A: plate making list image controlling section
- 6B: printing simulation image controlling section
- 7: keyboard
- 8: mouse
- 9: bus
- 10A: monitor screen
- 10: monitor apparatus
- 11: computer body
- 12: printing press
- 13: instruction information outputting section
- 20: image of printing picture
- 21a to 21c: image of picture (printing field) in single displaying mode (normal mode)
- 22a to 22c, 24a: image of picture (printing field) vertically divided in comparison displaying mode
- 23a to: 23c, 25a image of picture (printing field) transversely divided in comparison displaying mode
- 24b,: 24c image of picture (printing field) vertically divided in comparison displaying mode
- 25b,: 25c image of picture (printing field) transversely divided in comparison displaying mode
- 26: image of picture (printing field) with which ink supplying amount adjustment switch is disposed in superposed state
- 27: ink supplying amount adjustment switch
- 28a: vertical dividing line of picture (printing field)
- 28b: transverse dividing line of picture (printing field)
- 28c, 28m, 28y, 28k: color patch
- 29a: vertical line of image
- 29b: transverse line of image
- 30: menu bar
- 40: plate making list

### Best Mode for Carrying Out the Invention

In the following, an embodiment of the present invention is described with reference to the drawings.
FIGS. 1 to 14(g) show a printing simulation system and a printing management system according to the embodiment of the present invention, and they are described with reference to the drawings.

### [Apparatus Configuration]

In the present embodiment, the printing simulation system is incorporated in the printing management system. As shown in FIG. 2, the printing management system includes, as principal hardware components, a CPU 1 for carrying out various calculations, a RAM 2, a ROM 3, an input/output interface (I/F) 4, a hard disk drive (HDD) 5, a display controlling apparatus (display controlling section) 6, a keyboard 7, a mouse 8 and a bus 9 for interconnecting the components and further includes a monitor apparatus 10 including a monitor screen 10A and connected to the display controlling apparatus 6. It is to be noted that the CPU 1, RAM 2, ROM 3, input/output interface 4, hard disk drive 5 and display controlling apparatus 6 are provided as a computer main body 11.

Now, a functional configuration of the printing simulation system and the printing management system is described. As shown in FIG. 1, the printing management system is configured mainly from functional elements of the computer main body 11 and includes a plate making list image controlling section 6A and a printing simulation image controlling section 6B provided as functional elements of the display controlling apparatus 6 and an instruction information outputting section 13 for outputting instruction information to a printing press 12 based on various kinds of inputted instruction information.

The plate making list image controlling section 6A and the printing simulation image controlling section 6B change or produce a plate making list image and a printing simulation image, respectively, based on plate making data including printing picture data and printing condition data inputted through the input/output interface 4 as well as various kinds of instruction information inputted with reference to the plate making list image and the printing simulation image.
It is to be noted here that a case wherein a printing press which is a target of printing simulation is a newspaper rotary press is described as an example. Accordingly, a picture to be printed is hereinafter referred to sometimes as printing field.

Further, the printing condition in the present invention indicates information of a printing press to be used, information of a material used for printing (for example, a kind of printing paper and a kind of ink to be used), ink supplying amount information or the like. In the present embodiment, the ink supplying amount information and any other printing conditions are handled separately, and the latter printing condition is hereinafter referred to simply as [printing condition].

### [Display Control]

As a mode for displaying an image on the monitor screen 10A of the monitor apparatus 10, a plate making list displaying mode for displaying a plate making list image produced by the plate making list image controlling section 6A and a simulation displaying mode for displaying a printing simulation image produced by the printing simulation image controlling section 6B are provided. In the case of the present embodiment, the simulation displaying mode can be selected by a selection operation from the plate making list image displayed in the plate making list displaying mode. First, display of printing simulation is described.

### (Printing Simulation Image)

The printing simulation image is an image for simulation displaying a color development state where a designated printing picture is printed under a designated printing condition by a designated printing press on the monitor screen 10A without carrying out actual printing.

In order to simulation-display a color development state where designated printing is carried out by a designated printing press, information of the designated printing picture, color development characteristic information of the designated printing press as a printing condition, material information (for example, a type of printing paper or a type of ink to be used) as another printing condition, an ink supplying amount and so forth are required.
The information of the printing picture can be obtained from plate making data, and, in the case of a newspaper rotary press, the plate making data (plate information) is inputted in a linked relationship with a printing field date, folding machine information (including used printing unit information), plate information, page information and so forth.

Further, the color development characteristic information of the printing press represents, for example, a relationship between an ink supplying amount (ink density) and a color value and is called printing characteristic profile. This printing characteristic profile is a database which describes a relationship between picture data (for example, c, m, y, k plate making data and so forth) and a color value (color coordinate values of L*, a*, b* and so forth, an R(λ) spectral reflection factor, or an RGBI reflection density) and is unique to a printing section (printing unit) of each printing press, and a profile determined in advance in such a manner as described below may be acquired.

In particular, if a color tone measurement sensor (color development state detection section, color value detection means) for detecting an actual value (actual color value) of a color value of each color which indicates a color development state of a picture of a printing portion of traveling printing paper (web) is provided in the target printing section and a picture for characteristic detection in regard to which a tone value for detecting a characteristic or the like is known is printed with a predetermined ink thickness, then a relationship between each ink supplying amount and a corresponding color value can be calculated and the color development characteristic information of the printing press can be obtained.

It is to be noted that the color value is a value which indicates a color development state and any of density values of I, R, G and B, color coordinate values of L*, a*, b* (hereinafter referred to sometimes as Lab) and so forth, a spectral value R(λ) can be used as the color value. Further, for example, if the densities of I, R, G and B are determined as color values, then an IRGB densitometer can be used as the color tone measurement sensor. If the color coordinate values of Lab or the like are determined as color values, then a color coordinate sensor can be used as the color tone measurement sensor. Further, if the spectral value R(λ) is determined as a color value, then a spectrum measuring instrument can be used as the color tone measurement sensor. As the color tone measurement sensor, various measurement apparatus can be applied only if they can measure a color development state.

In this manner, if a picture of a printing object and a color development characteristic of a printing press (printing section) to be used for printing are found, then color development where the picture of the printing object is printed by the specific printing press to be used for printing can be simulation-displayed on the monitor screen 10A. Further, although details are hereinafter described, simulation-display of a selected picture is carried out in response to the selected printing press (printing section) and the designated ink supplying state, and besides the selected picture can be displayed for comparison under a plurality of printing conditions [by a plurality of printing presses (printing sections), in different ink supplying states and so forth].

It is to be noted that, even if a picture is simulation-displayed on the monitor screen 10A in accordance with the color development characteristic of the specific printing press, an image displayed on the monitor screen 10A becomes different from that of an actual printed matter depending upon the color development characteristic of the monitor 10 itself. In order to eliminate or reduce the difference, for example, the color development characteristic of the monitor screen 10A may be acquired in advance, for example, using the publicly known technique disclosed in Patent Document 1 or 2 so that simulation displaying data is corrected taking the acquired color development characteristic into consideration. However, since it is premised in the case of the present simulation printing display that a technique for evaluating color development only on the monitor screen 10A is used, correction of the simulation displaying data taking the color development characteristic of the monitor screen 10A into consideration is not essentially required.

Here, more detailed displaying modes where simulation display is carried out on the monitor screen 10A are described.
While the picture of a result where printing is simulated is displayed on the monitor screen 10A, as the display where printing is simulated, a single-displaying mode for displaying a selected picture under a single printing condition and a comparison displaying mode for displaying a selected picture in parallel under a plurality prinking conditions are provided.
On the printing simulation displaying screen, a menu bar 30 is displayed at an upper portion of a simulation-displayed image 20 of a printing picture as shown in FIG. 3, andmenubuttons of [display], [comparison], [displayingmode], [image selection], [Dry/Wet], [density change] and [printing condition] are displayed on the menu bar 30.

The button of [display] shown in FIG. 4(a) is used where the single-displaying mode is to be selected. The button of [comparison] shown in FIG. 4(b) is used where the comparison displaying mode is to be selected. The button of [displaying mode] shown in FIG. 4(c) is used in order to select a further displaying type for comparison display where the comparison displaying mode is selected. The button of [image selection] shown in FIG. 4(d) is used in order to select an image to be displayed after a further displaying type is selected through the [displaying mode]. The button of [Dry/Wet] shown in FIG. 4(e) is used in order to select whether a state Wet before ink drying immediately after ink transfer or a state Dry after ink drying is simulation-displayed taking dry-down after printing into consideration. The button of [density changing] shown in FIG. 4(f) is used in order to change the ink density (ink supplying amount) of the simulation displaying image. The button of [printing condition] shown in FIG. 4(g) is used in order to designate a printing condition.

Where the single-displaying mode is to be selected, the button of [comparison] is designated in advance to display a detailed menu as shown in FIG. 4(b) to designate a normal mode and then the button of [display] is designated as shown in FIG. 4(a). Consequently, as the detailed menu, a Δ mark for carrying out designation to display only an upper portion of a printing field, a V mark for carrying out designation to display only a lower portion of a printing field, an overall printing field mark for carrying out designation to display an overall printing field and an A mark and a B mark (split) for selecting whether an A screen or a B screen is to be displayed as a screen to be displayed are pull-down displayed. In the case of the present embodiment, the printing press is a newspaper rotary press and a printing drum is a double drum, and two kinds of pictures can be printed. While normally the A mark is designated and the same picture is used for the two kinds of pictures, where printing is to be carried out using two kinds of pictures different from each other, the B mark is designated.

Then, one of the Δ mark, ∇ mark, and overall printing field mark is designated after the A mark or the B mark is designated. Here, if the Δ mark is designated, then only an upper portion of the printing field is displayed as indicated by reference character 21a in FIG. 5(a). However, if the V mark is designated, then only a lower portion of the printing field is displayed as indicated by reference character 21b in FIG. 5(b). Further, if the overall printing field mark is designated, then the overall printing field is displayed as indicated by reference character 21c in FIG. 5(c). Consequently, in the single-displaying mode, overall display for displaying an overall picture and partial display for selecting and displaying part of a picture can be selected.

Further, in order to select the comparison displaying mode, the button of [comparison] is designated in advance to pull-down display a detailed menu as shown in FIG. 4(b) . In the detailed menu, not only the menu button of [normal] for designating the normal mode described above but also menu buttons of [vertical comparison 2], [vertical comparison 3], [vertical comparison 4], [transverse comparison 2], [transverse comparison 3] and [transverse comparison 4] are displayed.
The [vertical comparison 2], [vertical comparison 3] and [vertical comparison 4] are displaying modes in which an image on the monitor screen is vertically divided with a vertical line or lines to allow display for comparison such that the image portions are juxtaposed in a transverse direction, and the [vertical comparison 2] designates vertical division of an image into two parts; the [vertical comparison 3] designates vertical division of an image into three parts; and the [vertical comparison 4] designates vertical division of an image into four parts.

On the other hand, the [transverse comparison 2], [transverse comparison 3] and [transverse comparison 4] are displaying modes in which an image on the monitor screen 10A is transversely divided with a transverse line or lines to allow display for comparison such that the image portions are juxtaposed in a verticai direction, and the [transverse comparison 2] designates transverse division of an image into two parts; the [transverse comparison 3] designates transverse division of an image into three parts; and the [transverse comparison 4] designates transverse division of an image into four parts.
However, in those comparison displays, displaying is carried out in different modes depending upon selection of a [displaying mode].

In particular, the button of [displaying mode] is designated to pull-down display a detailed menu as shown in FIG. 4(c). In the detailed menu, menu buttons of [overall screen], [same place] and [free] are displayed.
The menu button of [overall screen] is for selecting a mode for displaying one picture (printing field) on the entire screen of the overall monitor screen 10A. Accordingly, if the [overall screen] is selected under a condition that divisional display of one of the [vertical comparison 2], [vertical comparison 3], [vertical comparison 4], [transverse comparison 2], [transverse comparison 3] and [transverse comparison 4] in the [comparison] menu described above is set, then one picture (printing field) is divided into a predetermined number of (here, 2, 3 or 4) regions with a vertical line or lines or a transverse line or lines, and a case can be displayed wherein printing is carried out for the divided regions each with a designated ink supplying amount under a designated printing condition.

In other words, if this [overall screen] is selected, then a picture (printing field) itself can be divided into a plurality of regions and displayed on the monitor screen 10A. Further, as a mode of the division in this instance, vertical division wherein the predetermined plural number (here, 2, 3 or 4) of regions obtained by the division are juxtaposed in a transverse direction of the monitor screen 10A and transverse division wherein the plural regions are juxtaposed in a vertical direction of the monitor screen 10A can be selected.

Accordingly, if the [vertical comparison 2] is selected after the [overall screen] is selected, then one picture (printing field) is displayed in a state wherein it is divided into two pictures by a division line 28a in the vertical direction as indicated by reference character 22a in FIG. 6(a). However, if the [vertical comparison 3] is selected, then one picture (printing field) is displayed in a state wherein it is divided into three pictures by division lines 28a in the vertical direction as indicated by reference character 22b in FIG. 6(b). Further, if the [vertical comparison 4] is selected, then one picture (printing field) is displayed in a state wherein it is divided into four pictures by division lines 28a in the vertical direction as indicated by reference character 22c in FIG. 6(c) or by vertical lines 29a as indicated by reference character 24a in FIG. 8(a).

On the other hand, if the [transverse comparison 2] is selected after the [overall screen] is selected, then one picture (printing field) is displayed in a state wherein it is divided into two pictures by a division line 28b in the transverse direction as indicated by reference character 22a in FIG. 7(a). However, if the [transverse comparison 3] is selected, then one picture (printing field) is displayed in a state wherein it is divided into three pictures by division lines 28b in the transverse direction as indicated by reference character 22b in FIG. 7(b). Further, if the [transverse comparison 4] is selected, then one picture (printing field) is displayed in a state wherein it is divided into four pictures by division lines 28b in the transverse direction as indicated by reference character 22c in FIG. 7(c) or by transverse lines 29b as indicated by reference character 25a in FIG. 9(a).

It is to be noted that the division lines 28a and 28b are shown for indicating a boundary and are virtual lines which are not actually displayed as lines in an image.
The menu button of the [same place] is a button for selecting a mode for designating, in portions of a screen image on the monitor screen 10A set for divisional display in accordance with one of the [vertical comparison 2], [vertical comparison 3], [vertical comparison 4], [transverse comparison 2], [transverse comparison 3] and [transverse comparison 4] in the [comparison] menu described above, a specific place of a picture (printing field) and displaying the designated same places in the screen image portions. Accordingly, if this [same place] is selected, then the specific places of the pictures (printing fields), that is, the same picture portions, are displayed for comparison in the predetermined number of (here, 2, 3 or 4) screen regions divided by a vertical line or lines 29a or a transverse line or lines 29b. FIG. 8(b) shows a screen image where the [same place] and the [vertical comparison 4] are selected, and FIG. 9(b) shows a screen image where the [same place] and the [transverse comparison 4] are selected.

The menu button of the [free] is a button for selecting a mode for designating, in screen image portions on the monitor screen 10A set for divisional display using a vertical line or lines 29a or a transverse line or lines 29b in accordance with one of the [vertical comparison 2], [vertical comparison 3], [vertical comparison 4]. [transverse comparison 2], [transverse comparison 3] and [transverse comparison 4] in the [comparison] menu described above, individual specific places of pictures (printing fields) and displaying the designated places in the individual screen image portions. Accordingly, if this [free] is selected, then a desired place of a picture (printing field) can be selected and displayed individually in each of the predetermined number of (here, 2, 3 or 4) screen regions divided by a vertical line or lines 29a or a transverse line or lines 29b. FIG. 8(c) shows a screen image where the [free] and the [vertical comparison 4] are selected, and FIG. 9(c) shows a screen image where the [free] and the [transverse comparison 4] are selected.
It is to be noted that also the vertical line or lines 29a and the transverse line or lines 29b in this instance are shown for indicating a boundary and are virtual lines which are not actually displayed as lines in an image.

In order to select a displaying portion of a picture (printing field) where the [same place] or the [free] described above is selected, the menu button of the [image selection] is selected so that a detailedmenu is pull-down displayed. For example, in FIG. 4(d), [first screen] to [fourth screen] are displayed as region names of four divisional screen images where the [vertical comparison 4] or the [transverse comparison 4] is selected. Then, if one of the [first screen] to [fourth screen] is designated, then selectable data are further pull-down displayed.

Where the monitor screen 10A is divided into screen regions juxtaposed transversely with each other by the vertical division described above, the region names of [first screen] to [fourth screen] can be allocated in order, for example, from the left (or the right). However, where the monitor screen 10A is divided into screen regions juxtaposed vertically with each other by the transverse division described above, the region names of [first screen] to [fourth screen] can be allocated in order, for example, from the top (or the bottom).
It is to be noted here that, when a specific place of a picture (printing field) is selected, one of the divisional regions can be selected. For example, where the monitor screen 10A is divided into two screen regions as shown in FIGS. 6(a) and 7(a), one of the two divisional regions can be selected, and, where the monitor screen 10A is divided into three screen regions as shown in FIGS. 6(b) and 7(b), one of the three divisional regions can be selected. Further, where the monitor screen 10A is divided into four screen regions as shown in FIGS. 6(c) and 7(c), one of the four divisional regions can be selected.

In this instance, in order to select a displaying portion from within a picture, only it is necessary to position a pointer in a selected region to carry out a designation operation, and a mouse for moving a pointer to carry out a designation operation or a like member corresponds to a selection information inputting section for inputting displaying portion selection information.
In this manner, in the present embodiment, although, when a specific place of a picture (printing field) is selected, the specific place cannot be selected fully freely, for example, an overall picture (printing field) may be displayed on the monitor screen 10A so that the specific place can be selected so as to be cut out at an optional position in the vertical direction or the transverse direction. In this instance, if a pointer is positioned at a starting position and an ending position of the selected region to carry out a designation operation or the center of the selected region is operated for designation, then a configuration by which a specific place can be selected can be implemented, and a mouse for moving a pointer to carry out a designation operation or a like member corresponds to a selection information inputting section for inputting displaying portion selection information.

In the menu of selectable data, types of data which can be selectively displayed in the regions of the [first screen] to [fourth screen] are displayed. Here, [original picture], [setting], [recording 1], [recording 2], [recording 3] and [name of specific printing press (reference printing press in a specific printing factory)] representative of an image processed with a color development characteristic profile of a specific printing press are displayed. It is to be noted that the [original picture] indicates an original picture which is not processed at all and the [setting] indicates an image for which color correction hereinafter described is performed. Further, the [recording 1] to [recording 3] indicate formerly recorded images for which a required process is performed, and the [name of specific printing press] indicates an image based on a color development characteristic of the specific printing press.

Consequently, as shown in FIGS. 8(a) to 8(c) and 9(a) to 9(c), a printing simulation image corresponding to a designated one of the [original image], [setting], [recording 1], [recording 2], [recording 3] and [name of specific printing press] is displayed on the monitor screen 10A at each divisional displaying portion set in accordance with selected modes (one of the [overall screen], [same place] and [free], and one of the [vertical comparison 2], [vertical comparison 3], [vertical comparison 4], [transverse comparison 2], [transverse comparison 3] and [transverse comparison 4]) in each of the [first screen] to [fourth screen].

It is to be noted that the button of the [original picture] is a button for displaying an original image for which no process is carried out, and the button of the [setting] is a button for displaying an image for which color correction hereinafter described is carried out. Further, the buttons of the [recording 1] to [recording 3] are buttons for displaying an image which is recorded formerly and for which a required process is performed, and the button of the [name of specific printing press] is a button for displaying an image printed by the printing press.
The button of the [Dry/Wet] is a switch for selecting whether an image in a wet state (Wet) just after ink transfer when printing is carried out by a printing press is to be displayed or an image in a dry state (Dry) wherein ink is dried fully after ink transfer when printing is carried out by a printing press is to be displayed. Here, since it is taken into consideration that an image on a printing face in a wet state just after printing is detected by means of a sensor and control of printing (particularly, color tone control) is carried out, not only an image in a dry state when printing is completed but also the printed image detected by the sensor can be assumed as it is and displayed as a wet state image. If the button of the [Dry/Wet] is selected as illustrated in FIG. 4(e), then menus of the [Dry] and [Wet] are pull-down displayed such that one of the [Dry] and [Wet] can be selected.

The button of the [density change] is a button for carrying out a density changing operation after a type of data which can be selectively displayed is designated on the monitor screen 10A. If the button of the [density change] is selected, then menus ([original picture], [setting], [recording 1], [recording 2], [recording 3] and so forth) of selectable data are pull-down displayed. If one of the menus of the selectable data is selected for each of the regions displayed on the monitor screen 10A in the mode of the [density change], then display of an image in the region is carried out with a color development characteristic corresponding to the selected data.

For example, FIG. 10(a) shows an example of display where the [transverse comparison 4] and the [free] are selected. If the [density change] is selected, then a [change] button is displayed at a left upper portion in each of the four vertically divided displaying regions and the menus ([original picture], [setting], [recording 1], [recording 2], [recording 3] and so forth) of the selectable data are pull-down displayed as shown in FIG. 4(f). Here, if one of the [original picture], [setting], [recording 1], [recording 2], [recording 3] and so forth is selected from the menus of the selectable data, then display of an image in the region is carried out with a color development characteristic corresponding to the selected data.

Together with this, an ink supplying amount adjustment switch (ink supplying amount state adjustment mark) 27 is displayed in a superposed relationship with an image 26 of the picture (printing field) as shown in FIG. 10(b). The ink supplying amount adjustment switch 27 includes ink supplying amount increasing correction switches 27a, 27c, 27e and 27g, ink supplying amount decreasing correction switches 27b, 27d, 27f and 27h, displaying sections 27i, 27j, 27k, and 271 for digitally displaying correction amounts in response to an operation of the switches, a determination switch and an update destination selection switch as shown in FIG. 10(c).

It is to be noted that the switches 27a and 27b and the displaying section 27i relate to cyan (C), and the switches 27c and 27d and the displaying section 27j relate to magenta (M). Further, the switches 27e and 27f and the displaying section 27k relate to yellow (Y), and the switches 27g and 27h and the displaying section 271 relate to black (K).

Accordingly, if the [density change] is selected and the [change] button at a left upper portion in each of the divided displaying regions is designated and then the [setting] is selected and then the ink supplying amount adjustment switch 27 is displayed, whereafter the correction switches 27a to 27h are operated, then display change (change of color development) where an ink supplying amount is changed can be applied to an image displayed on the monitor screen 10A.

It is to be noted that, while plate making list information hereinafter described is given on the assumption that the operations described above are carried out, the button of the [printing condition] is selected as shown in FIG. 4 (g) to provide other printing conditions. While "newspaper" of the [printing condition] in this instance indicates the printing characteristic profile according to newspaper printing, for example, a characteristic of a reference rotary press of the customer, an ISO reference value, a JAPAN COLOR standard, a newspaper color advertisement color sample NSAC (Nihon Shimbun Ad Color) reference value and so forth are designated.

### (Plate Making List Image)

As described above, while the present printing simulation system is incorporated in the printing management system, a plate making list image relating to the printing simulation system in the printing management system is described here.

FIG. 11 is a view showing an example of an image of a plate making list 40 displayed on the monitor screen 10A. As shown in FIG. 12(a), menus of copy, start of search and end are displayed at a left upper portion in the image of the plate making list 40. Further, at an upper portion of the plate making list 40, selection menus of printing field date, folding machine information (including used printing unit information), plate information and page information are displayed as search conditions.

A search function is available as one of using methods of the plate making list 40. If a date 42a, a foldingmachine 42b, a plate 42c and a page 42d of search conditions of the plate making list 40 are designated and pointer operation of a searching starting button 41a is carried out, then plate making data corresponding to the designated conditions is picked up and is displayed for identification from the other data as shown in FIG. 11. Further, as shown in FIG. 12(b), only plate making data corresponding to the designated conditions can be displayed in a group. Selection menus are displayed.

Further, also deletion inhibition setting of data is possible, and in a deletion inhibition mode, a deletion inhibition item 43a is selected from within the data in the plate making list 40 as shown in FIG. 13(a). Then, a confirmation operation of the deletion inhibition setting is carried out on a confirmation screen image 44a displayed in accordance with the selection as shown in FIG. 13(b). Setting of deletion inhibition is completed therewith. In this instance, as indicated by reference character 43b in FIG. 13(c), a displaying color of the deletion inhibition item is changed over to a different color.

Further, after the setting of the deletion inhibition setting, if a deletion inhibition item 43c which is set for deletion inhibition is selected from within the data of the plate making list 40 as shown in FIG. 13(d), then a confirmation screen image 44b is displayed in accordance with the selection as shown in FIG. 13(e). Further, if a confirmation operation of deletion inhibition cancellation is carried out, then setting of the deletion inhibition is cancelled.
As a using method of the plate making list 40, a copy function of a color correction value and a function of selecting an image of a color correction target are available.

According to the copy function of a color correction value, if a menu 41b of copy of an image of the plate making list 40 is selected as shown in FIG. 14(a), then an inputting framework 45 for color correction value copy is displayed in a superposed state. Here, a thumbnail image corresponding to a plate annexed to the plate making list 40 is selectively designated as an operation for selecting a thumbnail image 46 of a copy source as shown in FIG. 14(b). Consequently, an image of the copy source is designated in the inputting framework 45 as shown in FIG. 14(c). Further, if one copy destination is selected from a menu of copy destinations displayed in the inputting framework 45 shown in FIG. 14(d) as shown in FIG. 14(e) and then a confirmation operation is carried out on the confirmation screen image shown in FIG. 14(f), then copy with a color correction value is carried out.

Then, in order to select an image of a color correction target, if a thumbnail image 46 corresponding to a plate annexed to the plate making list 40 is selectively designated as shown in FIG. 14(g), then a printing simulation image is selected and also related printing information (various kinds of printing data) is set incidentally to image information.

### (Working and Effect)

The printing simulation system and the printing management system according to the embodiment of the present invention are configured in such a manner as described above. Therefore, when the picture of a result where a picture of designated picture data is printed based on printing data (picture data and printing condition data) under a designated printing condition is simulation-displayed on the monitor screen 10A, in simulation display where a color development state differs depending upon a difference of a printing condition, that is, upon a difference of an ink supplying amount or a difference of a usedprintingpress, the pictures of results where one picture (printing field) is divided into a plurality of regions and printing is carried out in the divided regions under the printing conditions can be displayed in an adjacent relationship to each other by such overall screen image display as shown in FIGS. 6(a) to 6(c) and FIGS. 7(a) to 7(c).

If images to be compared with each other are individually displayed, then the portions of the images to be compared with each other become spaced from each other and it is difficult to compare them with each other. However, in the case of the present system, between the regions divided at a location of each division line 28a in the vertical direction or each division line 28b in the transverse direction, the pictures of results where printing is carried out under different printing conditions are displayed continuously without being spaced from each other on the division line 28a or 28b. Further, on each boundary between images, a difference between color states under the different printing conditions is clearly represented, and the difference between the color states under the different printing conditions can be compared with each other more easily. Accordingly, by adjusting a color tone while carrying out printing in simulation and referring to the comparison screen image, a printing color tone can be adjusted with high accuracy in advance without carrying out actual printing.

Particularly, since simulation change of an ink supplying amount can be carried out while the screen image is referred to through the ink supplying amount adjustment switch 27 displayed in a superposed state on the printing simulation image, the printing color tone can be adjusted easily in advance.
It is to be noted that, if it is made possible to set a place at which vertical division or transverse division is to be carried out to an arbitrary place of the monitor screen 10A in the vertical direction or to an arbitrary place of the monitor screen 10A in the transversedirection, then comparison between color states under the different printing conditions can be carried out at the optimum place and comparison in color can be carried out more appropriately.

Further, color states under the different printing conditions can be compared with each other while overall displaying portions of pictures are compared with each other by such same place display as shown in FIGS. 8(b) and 9(b). Further, since displaying portions unique to divided screen regions can be selected and displayed by such free display as shown in FIGS. 8(c) and 9(c), color states under the different printing conditions can be compared with each other in more various modes.

Furthermore, with the present printing management system, if a plate making list in which plate making data including picture data are associated is displayed and a thumbnail image of the picture data annexed and displayed corresponding to the plate making data is operated for designation in the plate making list, then the displaying mode can be changed over to the simulation displaying mode, and confirmation of a color development state, adjustment in advance of an ink supplying amount and so forth can be carried out while printing management is carried out beginning with a plate making process.

### (G) Others

Although the embodiment of the present invention is described above, the embodiment of the present invention is not limited to that described above.
For example, upon ink supplying amount control, color patches 28c, 28m, 28y and 28k of the colors of C, M, Y and K may be displayed in a superposed state on overall screen display along boundaries between regions between which the printing condition (ink supplying amount) is different in a picture (printing field) 22a such that they cross the division lines 28a. In this instance, if, upon simulation adjustment of the ink supplying amount, also color development states of the color patches 28c, 28m, 28y and 28k are varied in a corresponding relationship together with variation of the color development state in the regions responsive to the simulation adjustment, then the simulation adjustment of the ink supplying amount can be carried out readily while the color patches 28c, 28m, 28y and 28k are referred to.

Also it seems possible to indicate, as color patches, not only color patches of C, M, Y and K but also overlapping colors of the ink of R (red), G (green), B (blue) and so forth, and the color patches can be used as a reference in simulation adjustment of the ink supplying amount.
Further, while the foregoing description of the embodiment is given taking a newspaper rotary press as an example, the present invention can be applied widely to various printing presses beginning with various offset printing presses.

## Claims

1. A printing simulation system, comprising:
a monitor apparatus; and
a display controlling apparatus adapted to simulation-display the picture of a result where a picture of the picture data is printed based on picture data to be printed and printing condition data under a printing condition of the printing condition data on a monitor screen of said monitor apparatus; and wherein
a displaying mode which is a displaying mode where a plurality of printing conditions are applied and in which results where one picture of the result is divided into a plurality of regions and, based on the picture data and the printing conditions, printing is carried out in the divided regions under the printing conditions are simulation-displayed is provided as a simulation-displaying mode by said display controlling apparatus.

2. The printing simulation system according to claim 1, wherein the printing condition includes a color development characteristic of a printing press to be used for printing, and
a displaying mode which is a displaying mode where a plurality of printing presses are to be used for the printing and in which the picture is divided into a plurality of regions and pictures of results where printing is carried out in the divided regions by the printing presses based on the picture data and color development characteristic data and an ink supplying amount state of the printing presses are simulation-displayed is included as a simulation-displaying mode where a plurality of printing conditions are applied.

3. The printing simulation system according to claim 1, wherein the printing condition includes an ink supplying amount state upon printing, and
a displaying mode which is a displaying mode where a plurality of ink supplying amount states upon printing are applied and in which pictures of results where the picture is divided into a plurality of regions and printing is carried out with the ink supplying amount states in the divided regions based on the picture data and color development characteristic data and the ink supplying amount states of the printing press are simulation-displayed is included as a simulation-displaying mode where a plurality of printing conditions are applied.

4. The printing simulation system according to any one of claims 1 to 3, wherein, when the picture is divided into a plurality of regions and displayed on the monitor screen, vertical division by which the picture is divided by a vertical line or lines such that the plural regions are juxtaposed in a transverse direction of the monitor screen and transverse division by which the picture is divided by a transverse line or lines such that the plural regions are juxtaposed in a vertical direction of the monitor screen can be selected.

5. The printing simulation system according to claim 4, wherein, when the picture is divided into a plurality of regions and displayed on the monitor screen, the portions at which the vertical division and the transverse division are carried out can be set to an arbitrary transverse direction portion or portions or an arbitrary vertical direction portion or portions of the monitor screen.

6. The printing simulation system according to any one of claims 1 to 5, wherein a displaying mode which is a displaying mode where a plurality of printing conditions are applied and in which pictures of results where the monitor screen is divided into a plurality of regions and a displaying portion is selected from within the picture and then printing is carried out in the selected displaying portions in the divided screen regions under the printing conditions are simulation-displayed is provided as a simulation-displaying mode by said displaying controlling apparatus.

7. The printing simulation system according to claim 6, further comprising a selection information inputting section adapted to input displaying portion selection information for selecting the displaying portion from within the picture by said display controlling apparatus; and wherein
a selection mode for selecting same displaying portions in the divided screen regions and another selection mode for selecting unique displaying portions individually in the divided screen regions are provided as selection modes to be inputted from said selection information inputting section.

8. The printing simulation system according to claim 6 or 7, wherein, when the screen is divided into a plurality of regions, vertical division by which the plural regions are juxtaposed in a transverse direction of the monitor screen and transverse division by which the plural regions are juxtaposed in a vertical direction of the monitor screen can be selected.

9. The printing simulation system according to claim 8, wherein, when the screen is divided into a plurality of regions, the portions at which the vertical division and the transverse division are carried out can be set to an arbitrary transverse direction portion or portions or an arbitrary vertical direction portion or portions of the monitor screen.

10. The printing simulation system according to any one of claims 1 to 9, wherein an ink supplying amount adjustment mode in which an ink supplying amount adjustment switch for adjusting an ink supplying amount state which is one of the printing conditions is displayed on the monitor screen and the printing results to be simulation-displayed on the monitor screen can be changed, in response to a changing operation of the ink supplying amount state carried out using the ink supplying amount adjustment switch, so as to correspond to the changed ink supplying amount state, is provided as a displaying mode on the monitor screen by said display controlling apparatus.

11. A printing management system which incorporates the printing simulation system according to any one of claims 1 to 10, wherein:
a plate making list displaying mode in which a plate making list in which plate making data including the picture data and data regarding a printing press for carrying out printing based on the plate making data are associated with each other is displayed on the monitor screen is provided as a displaying mode of the display controlling apparatus;
the picture data corresponding to the plate making data is displayed as a thumbnail image in an annexed state to the plate making list; and
said display controlling apparatus is configured such that the displaying mode thereof is changed over to the simulation-displaying mode by designating the thumbnail image by an operation.

12. A printing simulation method for simulation-displaying the picture of a result where a picture of the picture data is printed based on picture data to be printed and printing condition data under a printing condition of the printing condition data on a monitor screen, wherein:
a displaying mode which is a displaying mode where a plurality of printing conditions are applied and in which results where one picture of the result is divided into a plurality of regions and, based on the picture data and the printing conditions, printing is carried out in the divided regions under the printing conditions are simulation-displayed is provided as a simulation-displaying mode in which the simulation-displaying is to be carried out.
